# EUROPEAN PATENT APPLICATION

(11) **EP 2 581 972 A1**
(43) Date of publication of application: **17.04.2013**
(21) Application number: 11185283.6
(22) Date of filing: 14.10.2011
(51) Int. Cl.: H01M 8/02, H01M 8/04, H01M 8/06

(54) **Methods and systems for improving fuel cell efficiency**

(71) Applicant: Research In Motion Limited, Waterloo, ON N2L 3W8 (CA)
(72) Inventor: Sutarwala, Taha Shabbir Husain, Waterloo, Ontario N2L 3W8 (CA); Rich, David Gerard, West Bloomfield, MI 48322 (US)
(74) Representative: Moore, Barry

(57) **Abstract**

The disclosure is directed at a method and system for improving the efficiency of fuel cells by removing impediments within the fuel cell channel. The system includes at least one sensor and a processor for determining when a gas, such as carbon dioxide, concentration level has surpassed a maximum threshold. The processor then activates an impediment removing element to remove or release gas bubbles within the fuel cell channel which are blocking reaction sites or fuel flow.

## Description

### FIELD

The present disclosure relates generally to fuel cells. More particularly, the present disclosure relates to methods and systems for improving fuel cell efficiency.

### BACKGROUND

As the technology for portable electronic devices―such as a mobile communication devices (such as cellular phones or smart phones), media players, remote controls, electronic navigation devices (such as Global Positioning System devices), personal digital assistants or portable computers (such as tablet computers or laptop computers)―continues to develop, new functionalities and applications will become available for these devices. Correspondingly, the energy demand for operating these devices will also increase thereby requiring their power source, such as rechargeable batteries, to be recharged or replaced on a regular basis. In order to meet these higher power demands, other power or energy sources, such as a fuel cell may be implemented with portable electronic devices as a solution to power these devices or to act as a secondary power source.

### BRIEF DESCRIPTION OF THE DRAWINGS

Embodiments of the present disclosure will now be described, by way of example only, with reference to the attached figures.
Figure 1 is a conventional fuel cell channel;
Figure 2A illustrates apparatus for improving fuel cell efficiency within a fuel cell channel according to one embodiment;
Figure 2B illustrates a cross-section of the fuel cell of Figure 2A;
Figure 3A illustrates another embodiment of apparatus for improving fuel cell efficiency within a fuel cell channel;
Figure 3B illustrates a cross-section of the fuel cell of Figure 3B;
Figure 4 illustrates a third embodiment of apparatus for improving fuel cell efficiency within a fuel cell channel; and
Figure 5 illustrates, in flow chart form, a method of improving fuel cell efficiency.

### DETAILED DESCRIPTION

Some portable electronic devices may be handheld, that is, sized and shaped to be held or carried in a human hand, and making fuel cell-based power systems for handheld portable electronic devices may present special challenges. As fuel cell technology is being developed, and as fuel cell technology is adapted for use on a smaller scale, some concerns―including concerns that are different from larger-scale implementation―generally should be addressed so that fuel cells can be used effectively as a power source for portable electronic devices.

One issue that reduces the effectiveness and efficiency of a fuel cell is the formation of impediments or blockages, such as carbon dioxide bubbles, within a fuel cell channel along a catalyst or fuel reaction surface. The reduction of surface area for fuel cell chemical reactions may reduce the efficiency of the fuel cell; in colloquial language, power may be generated at a lower rate. It is, therefore, desirable to provide systems and methods that improve the effectiveness or efficiency of a fuel cell, or fuel cell system. In one embodiment, the system includes an apparatus for reducing, removing or eliminating impediments or blockages within the fuel cell channel.

In one aspect, there is provided a method of improving fuel cell efficiency by removing impediments within a fuel cell channel comprising monitoring a gas concentration level within a fuel cell channel, determining when the gas concentration level has surpassed a threshold level and activating an impediment removing element.

In another aspect, there is provided a system for improving efficiency of a fuel cell by reducing impediments within a fuel cell channel comprising at least one sensor, an impediment removing element and a processor, connected to the at least one sensor and the impediment removing element, wherein when the at least one sensor and the processor determine that a gas concentration level within the fuel cell channel is above a maximum threshold, the processor transmits a signal to activate the impediment removing element.

Other aspects and features of the present disclosure will become apparent to those ordinarily skilled in the art upon review of the following description of specific embodiments in conjunction with the accompanying figures.

As previously mentioned, there may be some challenges that bear upon making fuel cells practical power sources for portable electronic devices. One issue that reduces the effectiveness and efficiency of a fuel cell is the formation of impediments or blockages, such as carbon dioxide bubbles, within a fuel cell channel along a catalyst or fuel reaction surface. The reduction of surface area for fuel cell chemical reactions may reduce the efficiency of the fuel cell as power may be generated at a lower rate. Generally, the present disclosure provides methods and systems for improving the effectiveness, or efficiency of a fuel cell, or fuel cell system. In one embodiment, the system removes impediments, or blockages, from a fuel cell channel within the fuel cell. In another embodiment, the system controls the surface area for chemical reactions to occur within the fuel cell system.

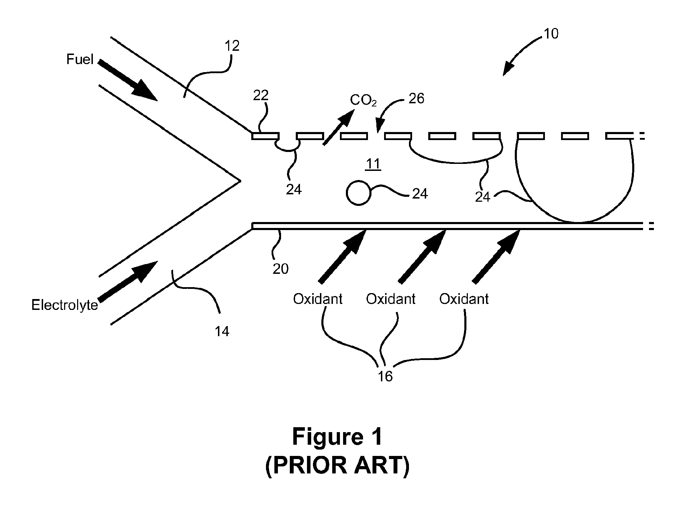

Figure 1 illustrates a conventional fuel cell channel 11 within a fuel cell 10. In operation, fuel enters the channel 11 from one inlet 12 and an electrolyte enters from a second inlet 14. Typically, the fuel is methanol, gasoline, or natural gas while the electrolyte may be potassium hydroxide or any other ion-conducting material. An oxidant is also delivered into the channel 11 through passageways (not shown). For example, the oxidant may be defused through a gas diffusion layer such as a porous sheet of carbon. In an alternative, the oxidant may be absorbed in the electrolyte and may flow into the fuel cell 10 through the second inlet 14. The channel 11 further includes catalyst surfaces, or layers, such as two surfaces 20 and 22. The two catalyst layers may be of the same material, but the fuel cell may be more efficient if one catalyst surface is a selective cathode 20 and the second catalyst surface is a selective anode 22, such as Pd-Co (Palladium-Cobalt) or AgO (Silver Oxide). Within the fuel cell channel 11, the electrolyte reacts with the cathode 20 and the fuel reacts with the anode 22.

In operation, the chemical reactions between the fuel, electrolyte and the catalyst surfaces produce the energy to power an electronic device, or to recharge a battery. However, these chemical reactions also produce impediments, or blockages, such as carbon dioxide bubbles 24. Some of these bubbles flow with the fluid in the channel 11 of the fuel cell and then exit out of the other end while some may rest on a surface of one of the catalyst surfaces 20 or 22. If one of the surfaces 20 or 22 includes a hydrophobic layer with vents 26, some of the bubbles 24 may escape through the provided vents 26.

The carbon dioxide bubbles 24 that do not exit the channel may attach themselves to the catalyst surfaces such as the anode surface 22 or they may form on the cathode surface. However, the cathode surface is usually porous in the case of gaseous oxidants such as oxygen. If selective certain catalysts are used, bubbles are less likely to form on the cathode surface and are more likely to be displaced by the flow of oxygen. The presence of these bubbles 24 on these surfaces may restrict other carbon dioxide bubbles from escaping through the vent(s) 26 or reduce the available surface area for chemical reactions on the catalyst layers 20 or anode 22. These bubbles 24 may continue to grow in size whereby they may restrict the entire passage of the fuel cell channel resulting in a blockage thereby cutting off all power generation by the fuel cell. In some cases, it is possible for oxygen bubbles to form, although the formation of oxygen bubbles tends to be rarer. This is because most of the oxygen is consumed at the cathode. Other debris such as salt, carbonate or bicarbonate may also form within the fuel cell.

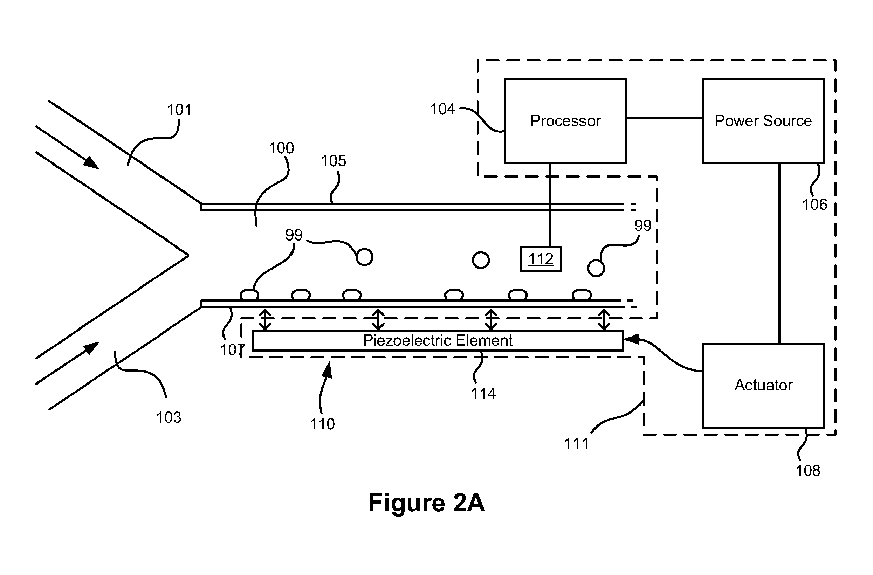

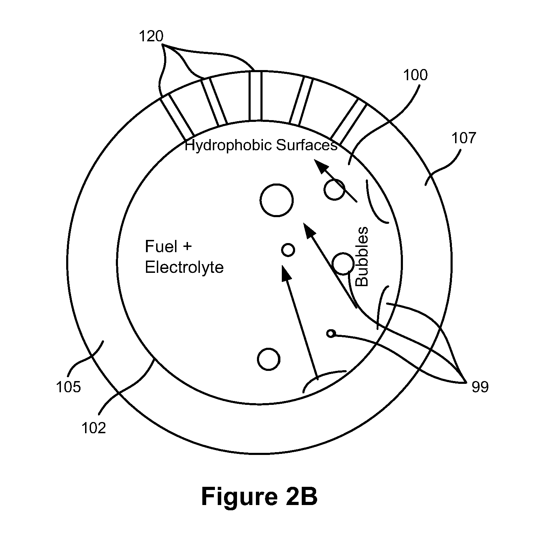

Figures 2A and 2B illustrate a fuel cell channel 100 including one embodiment of a novel system for improving fuel cell effectiveness or efficiency. Figure 2B is a cross-section of the channel 100 surrounded by an exterior wall 102 (colloquially speaking, Figure 2A gives a side cross view of the channel 100 and Figure 2b gives an end cross view). In these figures, the fuel cell channel is cylindrical, but the channel 100 may be shaped differently depending on the function of the fuel cell and the spacing available for the channel 100. In one embodiment, the channel 100 is hollow and tubular in shape but may be (for example) rectangular instead of cylindrical or rounded. The fuel cell has two inlets 101, 103 along with a set of catalyst surfaces, seen as a cathode 105 and an anode 107. Impediments or blockages, such as bubbles 99 may be seen as floating within the channel 100 and attached to the anode 107, however with the system for improving fuel cell effectiveness, these bubbles are reduced or removed. As discussed above, these bubbles may be created as a result of the chemical reactions occurring within the fuel cell channel during use. Although no vents are shown in Figure 2A, vents 120 are visible on the cross-section in figure 2B.

The fuel cell is further equipped with apparatus to improve the efficiency of the fuel cell 100, which may be also described as an impediment removal system 111. The system 111 includes a sensor 112 which is operatively connected to a processor 104 as well as a power source 106 through, for example, internal cabling. The power source may include a capacitor or a battery, and may also include or receive power from the fuel cell itself. The processor 104 may be a stand-alone processing unit or may be the processor for the portable electronic device within which the fuel cell is integrated.

The power source 106 provides power to an impediment removing element 110 of the removal system 111. The removal system 111 further includes an actuator 108 which activates the impediment removing element 110, such as a piezoelectric element 114. In an embodiment, the actuator 108 is operatively linked to and controlled by the processor 104. In an alterative, the actuator 108 may be integrated within the impediment removing element 110 or the impediment removing element may be activated directly by the power source 106 or processor 104. The power source 106, actuator 108, when present and the impediment removing element 110 are controlled by the processor 104 and it is the processor 104 that issues commands to engage or activate the removal system 111.

In operation, the sensor 112 senses the bubble or gas concentration level within the fuel cell channel 100. Generally speaking, the sensor 112 generates a signal as a function of the amount of gas per volume, which may include generating a signal as a function of a number of bubbles or a size of a bubble, or a presence of an amount of gas that may affect operation or efficiency, or a change in gas concentration. The signal may be in any form and may be or may correspond to a numerical value. For example, impediments or blockages, such as carbon dioxide bubbles, may be produced as a byproduct of chemical reactions occurring within the fuel cell channel 100 which increase the concentration level. In one embodiment, the sensor 112 is a carbon dioxide sensor that monitors (by sensing gas concentration over time or at various times) the level of carbon dioxide in the fuel cell channel 100. Once the sensor 112 senses that the concentration level is above a concentration threshold, the sensor 112 signals the processor 104 to activate the impediment removing element 110 to improve the effectiveness of the fuel cell by removing or reducing the number of impediments or bubbles. In one embodiment, a single sensor 112 may be strategically placed in a location well suited to monitor the carbon dioxide level. In an alternative, multiple sensors 112 may be located throughout the channel 100 to monitor the carbon dioxide level. It may be preferable to have multiple carbon dioxide sensors in larger fuel cell channels while a single sensor may be effective in a smaller fuel cell channel.

After receiving the signal from the sensor indicating that the gas concentration level has exceeded the concentration threshold, the processor 104 may initiate activation of the impediment removing element 110. In one embodiment, the processor 104 transmits a signal to the power source 106 to provide power to the actuator 108 so that the actuator 108 may activate the impediment removing element 110. In the example of Figure 2, activation of the piezoelectric element 114 causes the element to vibrate, which will cause the fuel cell channel 100 to shake. The vibration of the fuel cell channel 100 causes the bubbles 24 which are located on the catalyst surface 107 to loosen from the surface and then be directed downstream within the fuel flow and out of the channel 100 to increase the surface area available for producing chemical reactions. In an alternative embodiment, the piezoelectric element 114 may be attached to or incorporated into the fuel cell channel wall.

Once the gas concentration level has been reduced below the concentration threshold as determined by the processor 104 via signals from the sensor 112 level, the processor may de-activate the impediment removing element 110 so that it returns to a stationary position. In an alternative, there may be two thresholds, a maximum concentration threshold that provides for the activation of the impediment removing element and a minimum concentration threshold that provides for the deactivation of the impediment removing element.

In one embodiment, the piezoelectric element 114 may run continuously but it may be preferable to have a deactivation option to reduce the drain on the power source 106. In this embodiment, there would be no need for the processor or the sensor as the impediment removing element 110 is continuously activated. In another example, the impediment removing element may remain active for an amount of time.

In a particular case, the fuel cell 100 may be designed to be a power source of the portable electronic device, such as a smart phone. In this case, the impediment removing element 110 may be a vibrator or piezoelectric element already incorporated into the portable electronic device that vibrates the device when the device receives a phone call or if the user is being signaled of a message or alert. In this case the impediment removing system may make use of components already incorporated into the portable electronic device, and it is intended that fewer new or additional components will be required.

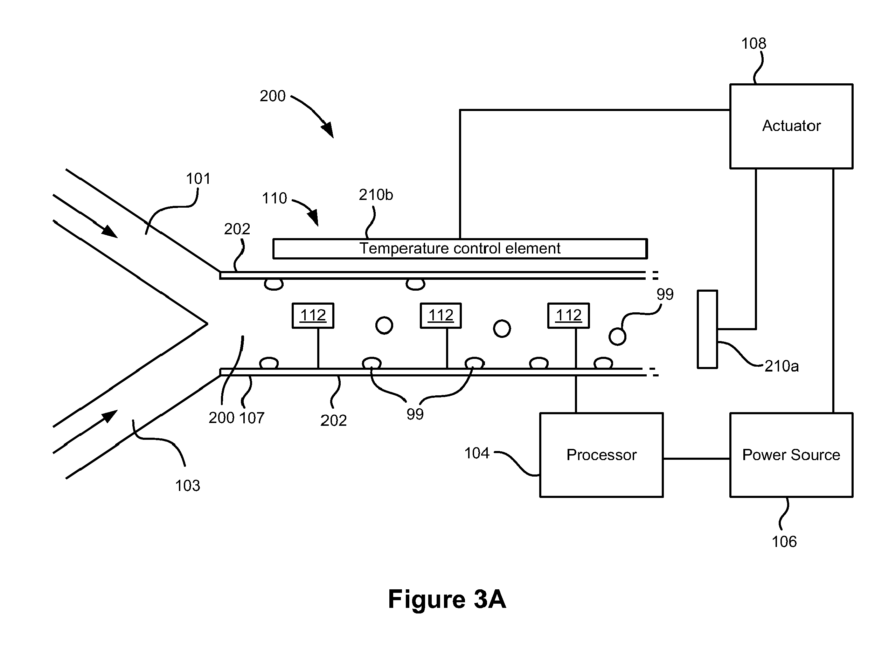

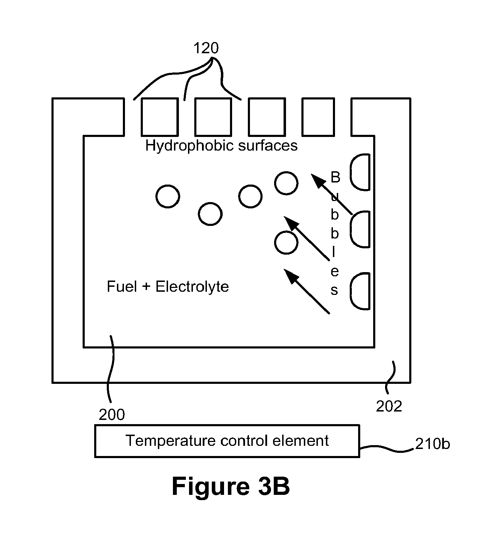

Figures 3A and 3B illustrate an alternative embodiment of the impediment removal or removing system 211 for a fuel cell channel, in which the fuel cell channel is a cuboid (or box-shaped) fuel cell channel. In this example, the system 211 comprises a set of sensors 112, a processor 104, a power source 106, an actuator 108 and an impediment removing element 110. In this embodiment, the inner wall of the fuel cell channel 200 is a non-selective catalyst surface, or layer 202, such as platinum. Although not shown, the channel 200 may include a hydrophobic layer to provide vents for the impediments or blockages to escape in order to further enhance the effectiveness of the fuel cell system.

Within the fuel cell channel 200, the plurality of sensors 112 is connected or in communication with the processor 104. The processor is connected to the power source 106 and activates the impediment removing element 110 once it is determined that the gas concentration level such as the carbon dioxide level, within the fuel cell has surpassed a threshold value. In one embodiment, the sensor determines when the threshold has been passed but in another embodiment, the sensor 102 may transmit the bubble or gas concentration values or levels and the processor 104 compares the received value(s) with the threshold value.

When activation of the impediment removing element is required, the power source 106 provides power to the impediment removing element 110, such as a temperature control element 210a or 210b. The temperature control element 210 may alternatively be activated by the actuator 108. The temperature control element 210 may be a thermal electric generator (TEG) or a Peltier cooler.

When the temperature of a surface rises, its surface tension is reduced. Since bubbles 99 tend to form, or collect, in higher surface tension locations and prefer to move towards lower surface tensions areas, the temperature control element 210 may either heat or cool specific areas of the fuel cell channel 200 to direct the bubbles 99 downstream or towards vents within the hydrophobic layer, if one is present or to draw them away from the catalyst surface 202.

If the fuel cell is of a smaller size, the temperature control element 210a may be located at an end of the fuel cell channel 200 opposite the inlets 101, 103 of the fuel cell channel 200. Once activated, the temperature control element 210a may heat the end in order to reduce the surface tension downstream. As the increased heat downstream reduces the surface tension at the end of the channel, the bubbles 99 are attracted to move to this area. The bubbles 99 release from the surfaces 202 so that they are removed from the reaction sites of the catalyst surface 202.

In one example, it may be preferable to have a temperature control element 210b parallel to or incorporated into the walls of the fuel cell channel 200. Use of the temperature control element 210b with a smaller fuel cell channel 200 is also contemplated. The temperature control unit may be placed on any wall that is not the anode. However, if the cross-sections of the fuel cell are larger such that gravity is a dominant force, the temperature control element 210 may be placed at the top wall of the fuel cell channel.

As with the previous embodiment, after it is determined that the bubble or gas concentration level has passed a threshold level, the removal system 111 is activated. As discussed before, the determination may be performed by the processor 104 or the sensors 112 depending on how the system 111 is implemented. When it is determined that the bubble or gas concentration level has passed the threshold level, the temperature control element 210 is activated by the processor 104 such as via a signal transmitted to the actuator 108. Once activated, the temperature control element may heat, for example through the use of a TEG, or cool, for example through the use of a Peltier cooler, a specific area of the channel to release the bubbles 99 from the reaction sites along the catalyst surface 202 or to cause the bubbles to flow towards the exit of the channel 200.

If a cooling temperature control element is used, the actuator may activate the control element 210 in a location that is sensed as containing a high level of gas, such as carbon dioxide. Once the wall of the channel, and thus the catalyst surface 202 in that area is cooled, the surface tension rises which causes the bubbles 99 to release from the wall to an area with lower surface tension, away from the catalyst 202. If a heating temperature control element is used, areas opposite high concentrations of carbon dioxide are heated in order to pull the bubbles 99 away from the higher concentration areas to allow them to flow through the channel 200 or to exit the channel 200 to increase the amount of reaction surface along the catalyst surface 202. Once the bubble or gas concentration level is determined to be return to a level under a minimum threshold, the temperature control element 210 may be deactivated.

Various modifications of the above are possible. For example, the temperature control element may completely surround the fuel cell channel, be adjacent to or be incorporated into the fuel cell channel walls. If adjacent or incorporated into all the fuel cell walls, it is the intent for the bubble or impediments to flow downstream with the fuel. In an alternative, the temperature control element may be incorporated in at least one and less than all the fuel cell channel walls. In this case, the walls without the temperature control element may contain vents, which are intended to allow the bubbles or impediments to escape the fuel cell channel as shown in Figure 3B. The temperature control element 210 may be a set of individually operated temperature control elements that may be activated to heat or cool specific locations throughout the fuel cell channel depending on the readings of the sensors 112. In another embodiment, the temperature control element 210 may always be activated. As the temperature change may only need to be in the range of one to a few degrees Celsius, the power drain to keep one area at a different temperature is intended to be small. In a further alternative, the temperature control element 210 may be a resistor that is located near or in proximity to the fuel cell channel and may heat or cool the reaction areas of the fuel cell channel as the resistor itself heats or cools. Further, the temperature control element 210 may be located at both the sidewalls and the end of the fuel cell channel 200 to release the bubbles from the reaction site and draw them downstream once they are released.

In a particular case, the fuel cell may be designed to be a power source for a portable electronic device. In this case, the temperature control element may be a heat producing component within the portable electronic device, for example a component designed to receive current. By using existing components as the temperature control element, it is intended that fewer new elements will be required to be added and less additional space, corresponding to less additional size requirements are needed to incorporate the fuel cell as a power source in the portable electronic device.

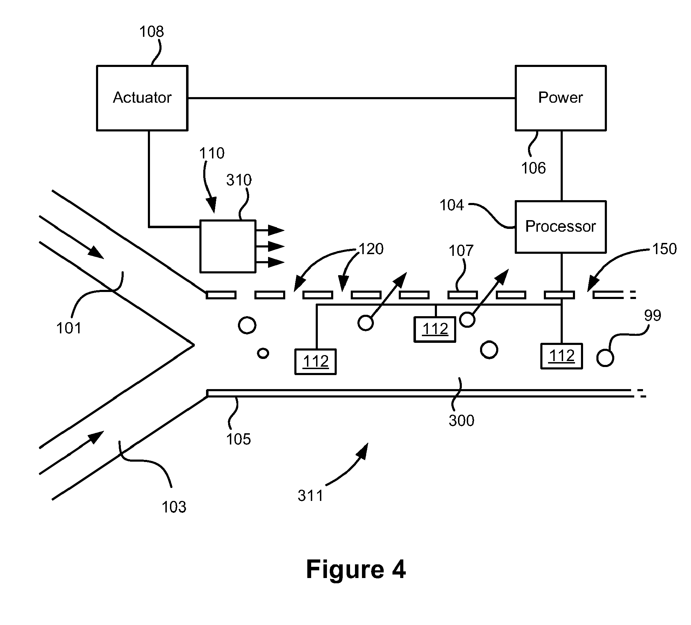

Figure 4 illustrates another embodiment of an impediment removal system 311 for a fuel cell. As above, the removal system 311 has at least one sensor 112 which relays a signal to a processor 104 once the bubble or gas concentration level has exceeded a threshold concentration. Alternatively, the sensor 112 may simply be transmitting the bubble or gas concentration level to the processor 104 which compares the received value with the threshold value. When it is determined that the bubble or gas concentration level is above the threshold, the processor 104 activates the actuator 108 via a power source 106. The actuator 108 activates the impediment removing element 110 which in the current embodiment is a flow control element 310. The flow control element 310 may be, for example, a fan, a vibration motor, a pump or an ultrasonic whistle.

In the fuel cell channel 300, one of the layers 107 or surfaces may include or be a hydrophobic layer, which includes vents 150 for impediments or bubbles 99 to escape or exit the fuel cell channel 300.

In one embodiment, if the flow control element 310 is a fan that is activated by the actuator 108 once activated, the fan directs air flow above the vent(s) 120 in the same direction of the flow received from the inlets 101 and 103. With this additional flow above the vents 120, the impediments or bubbles 99 will be more attracted to the vent region and are less likely to form over reaction sites located within the fuel cell channel 300. The flow control element 310 may run continuously or may be activated when the threshold concentration is passed. In another example, the flow control element 310 may be a vibration motor which may already be located within the portable electronic device for other functionality but may be capable of producing an air flow outside the fuel cell channel 300.

In a modification of the system in Figure 4, the flow control element 310 may be a low speed pump located within the fuel cell channel 300. When activated, the pump pumps the fluid down the channel to reduce the likelihood of bubbles 99 forming or attaching to the catalyst surfaces.

A similar modification may be used with an ultrasonic whistle as the impediment removing element to remove bubbles 99. The ultrasonic whistle can be used in various ways to remove the impediments from the fuel cell channel. In particular, the ultrasonic whistle could be used to shake the bubbles through the channel or to the vents. A piezoelectric transducer could be used to create high frequency sounds, for example greater than 20 kilohertz, which is intended to induce vibrations at or beneath the anode surface to shake the bubbles off the surface to clear the reaction site. In an alternative, the ultrasonic whistle could be used to burst the bubbles by generating pressure waves of ultrasound. At frequencies higher than 20 kilohertz, bubbles, typically sized in the range of µm to mm size, will grow to a critical size at which they will burst. The ultrasonic whistle could be controlled by the processor 104 to gradually increase the frequency to have a controlled gradual growth of the bubbles allowing the bubbles to burst without causing any liquid splatter.

Adding a pump or ultrasonic whistle as a flow control element 310 may be preferred in fuel cells with longer channels such as in the range of at least 10 cm or longer. As the technology surrounding pumps and ultrasonic whistle improves, the size of these components may decrease and may make them more practical solutions for fuel cells with channels under 10 cm in length.

In one embodiment having a flow control element 310, additional elements may be added to a device using the fuel cell as a power source. Adding further elements may require the form factor of the electronic device to be modified in order to accommodate further components and elements. In particular, an ultrasonic whistle may require additional space that may not be practical in an electronic device configured to receive a smaller sized fuel cell. For smaller sized devices, such as mobile communication devices, it may be preferred to use either an existing component or element of the device as the impediment removing element instead of adding further elements to the device. Many of the embodiments, however, may be comparatively small, compact and lightweight, which may be especially beneficial for portable electronic devices that are handheld.

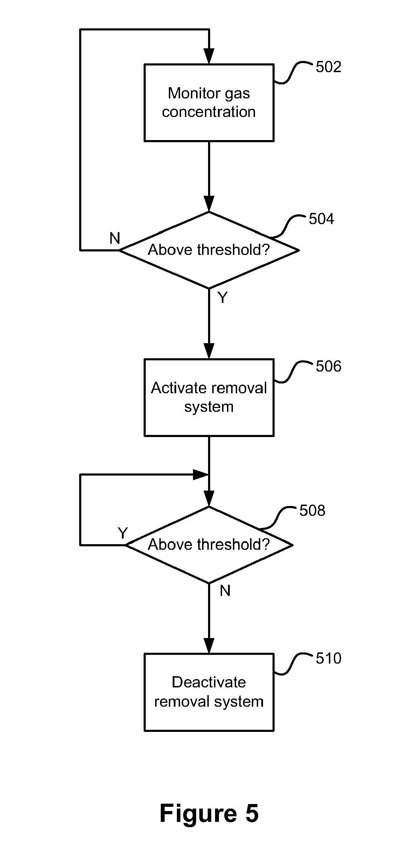

Figure 5 illustrates a method of improving the effectiveness of a fuel cell or a fuel cell system. In this embodiment, the method relates to the removal of impediments that block the flow of fluid within the fuel cell or are attached to reaction sites along the fuel channel walls. Fuel enters into the fuel cell channel through an inlet 101 while an electrolyte enters through a second inlet 103. The fuel reacts with the electrolyte to generate power, however, a byproduct of the reaction is the formation of impediments such as gas bubbles or carbon dioxide bubbles. While some of the bubbles travel through the fuel cell channel and escape out of the end of the channel, some bubbles may end up resting on and blocking reaction sites within the fuel cell channel. With a reduced amount of reaction sites, the fuel cell may become less efficient. The impediments may also increase in size such that the entire channel is blocked by the one or a plurality of bubbles. In order to improve fuel cell effectiveness, the impediments should be reduced, removed or eliminated.

In operation, the sensor 112 detects and monitors 502 the bubble or gas concentration level within the channel. The sensor may continuously monitor and track the gas or bubble concentration level, or may check the level at one or more time intervals for example every second, every minute, etc.

The check is performed to determine if the gas concentration level is above a maximum threshold value 504. This check may be performed by either the sensor 112 or the processor 104 as disclosed above. If the bubble or gas concentration level is below the threshold, the bubble or gas concentration level is continued to be monitored. If the bubble level or gas concentration level is above the threshold level, the impediment removing element is activated 506. The sensor 112 will continue to monitor the bubble or gas concentration level while the removal system is activated.

The impediment removing element may be activated by the transmission of a signal from the processor to an actuator which activates the impediment removing element or by the transmission of a signal from the processor directly to the impediment removing element. The impediment removing element then activates and either vibrates the channel (Figure 2), heats or cools the channel (Figure 3) or creates an air flow (Figure 4) to improve the effectiveness of the fuel cell by removing or eliminating impediments within the associated fuel cell channel or by causing the impediments to be released from blocking reaction sites within the catalyst surfaces.

While the impediment removing element is activated, a check is performed to determine if the bubble or gas concentration level is above a minimum threshold value 508. If the bubble or gas concentration level is still above the minimum threshold, the impediment removing element remains activated but if the bubble or gas concentration level returns to a level below the minimum threshold, the impediment removing element is deactivated, or stopped 510.

In another embodiment, the impediment removal system may be always on and running, which is intended to reduce the likelihood of the bubbles settling on the walls and reaction sites of the fuel cell channel. In this embodiment, there is no need to monitor the bubble or gas concentration level within the fuel cell channel.

In the preceding description, for purposes of explanation, numerous details are set forth in order to provide a thorough understanding of the embodiments. However, it will be apparent to one skilled in the art that these specific details are not required. In other instances, well-known electrical structures and circuits are shown in block diagram form in order not to obscure the understanding. For example, specific details are not provided as to whether the embodiments described herein are implemented as a software routine, hardware circuit, firmware, or a combination thereof.

Embodiments of the disclosure can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with circuitry to perform the described tasks.

One or more embodiments may realize one or more benefits, some of which have been mentioned already, such as enhanced efficiency and performance, and adaptability to small form factors. Further, various embodiments are generally adaptable to a variety of devices and sizes and form factors. The concepts are further applicable to a variety of geometries.

The above-described embodiments are intended to be examples only. Alterations, modifications and variations can be effected to the particular embodiments by those of skill in the art without departing from the scope, which is defined solely by the claims appended hereto.

## Claims

1. A method of improving fuel cell efficiency by removing impediments within a fuel cell channel comprising:
monitoring a gas concentration level within a fuel cell channel;
determining when the gas concentration level has surpassed a threshold level; and
activating an impediment removing element.

2. The method of Claim 1 wherein activating the impediment removing element comprises one of:
transmitting a signal to an actuator to activate the impediment removing element;
transmitting a signal directly to the impediment removing element;
activating a piezolelectric element to vibrate the fuel cell channel.

3. The method of Claim 1 wherein activating the impediment removing element comprises:
activating a temperature control element.

4. The method of Claim 3 wherein activating the temperature control element comprises one of:
heating a portion of the fuel cell channel;
cooling a portion of the fuel cell channel.

5. The method of Claim 1 wherein activating the impediment removing element comprises:
activating a flow control element.

6. The method of Claim 5 wherein activating the flow control element comprises one of:
creating an airflow around the fuel cell channel;
maintaining a constant fluid flow within the fuel cell channel;
activating an ultrasonic whistle.

7. The method of Claim 1 further comprising:
monitoring the gas concentration level; and
de-activating the impediment removing element after the gas concentration level is determined to be lower than a minimum threshold level.

8. A system for improving efficiency of a fuel cell by reducing impediments within a fuel cell channel comprising:
at least one sensor;
an impediment removing element; and
a processor, connected to the at least one sensor and the impediment removing element;
wherein when the at least one sensor and the processor determine that a gas concentration level within the fuel cell channel is above a maximum threshold, the processor transmits a signal to activate the impediment removing element.

9. The system of Claim 8 further comprising a power source for powering the at least one sensor and the processor.

10. The system of Claim 8 or 9 further comprising:
an actuator connected to the processor and the impediment removing element for activating the impediment removing element upon receipt of a signal from the processor.

11. The system of Claim 8 wherein the impediment removing element is a piezoelectric element.

12. The system of Claim 8 wherein the impediment removing element is a temperature control element.

13. The system of Claim 12 wherein the temperature control element is a thermoelectric generator or a Peltier cooling device.

14. The system of Claim 8 wherein the impediment removing element is a flow control element.

15. The system of Claim 14 wherein the flow control element is a vibration motor, a pump, an ultrasonic whistle or a fan.
